# EUROPEAN PATENT APPLICATION

(11) **EP 1 998 277 A1**
(43) Date of publication of application: **03.12.2008**
(21) Application number: 08251866.3
(22) Date of filing: 29.05.2008
(51) Int. Cl.: G06Q 10/00

(54) **System and method for multi-week scheduling**

(30) Priority: 31.07.2007 US 831260; 30.05.2007 US 940858 P
(71) Applicant: Verint Systems Inc., Melville, NY 11747 (US)
(72) Inventor: Hamilton, Edward, San Jose California 95125 (US); Fama, Jason, Redwood City California, 94061 (US); Fukanaga, Alex, Ota-Ku Tokyo 145-0061 (JP)
(74) Representative: Bibby, William Mark

(57) **Abstract**

Systems and methods of scheduling a customer center workforce are disclosed. One exemplary method comprises ordering a set of slots in the scheduling period to be bound to worker shifts. The method further comprises binding a first portion of the worker shifts within a domain to the ordered set of slots to produce a first schedule. The first schedule has a first evaluation factor. The method further comprises comparing the first evaluation factor to a second evaluation factor. The method further comprises outputting a selected schedule based on the comparison.

## Description

### FIELD OF THE DISCLOSURE

The present disclosure relates to customer centers and more specifically to scheduling, and more specifically, to automatically scheduling a customer center workforce.

### BACKGROUND

A manager in a customer center typically uses workforce scheduling software to create a schedule which assigns workers (agents) to shifts throughout the workday. The scheduling software chooses an optimal schedule that meets constraints while optimizing goals. Inputs such as predicted workload (e.g., call volume in 15-minute intervals, average call duration) and work rules (e.g., maximum shift length, possible shift start time, break requirements) are treated as constraints. Inputs such as expected level of service (e.g., call hold time) are treated as goals. The scheduler generates many possible schedules, and examines the possibilities to find a schedule that optimizes goals while remaining within the constraint boundaries.

Shift assignment rules are used to ensure that agents (or groups of agents) are assigned a certain number of shifts, days off, weekends off, working holidays, etc., within a given rule period. To provide for a more flexible workforce, it is desirable to allow for a rule period greater than one week (e.g., "worker must work 80 hours each 2 weeks"). However, conventional scheduling techniques typically cannot optimize for more than a one-week scheduling period, and combining a one-week schedule with a multi-week rule leads to difficulties when rules are dependent. For example, the rule "Must work 1 weekend each 2 weeks" and "Must work 2 days each 2 weeks" are dependent. To convert these rules into the correct combination of single-week rules (e.g., "Must work 1 weekend first week", "Must work 2 days first week", "Must work 0 weekends second week" and "Must work 0 days second week") requires a multi-week combinatorial search which is computationally infeasible. Thus, a need arises for these and other problems to be addressed.

### SUMMARY

Systems and methods of scheduling a customer center workforce are disclosed. One example method includes ordering a set of slots in the scheduling period. The method further includes binding a portion of worker shifts within a domain to the ordered set of slots to produce a first schedule. The first schedule has a first evaluation factor. The method further includes comparing the score of the first schedule to a second evaluation factor. The method further comprises outputting a selected schedule based on the comparison.

Another example method includes binding one shift within a portion of shifts to one of a set of slots. The method further includes updating a plurality of counters in accordance with the binding. Each counter has a corresponding work rule, and each work rule has a target. The method further includes computing a score for the current schedule. The score is based on a difference between each counter and the target for the corresponding work rule. The method further includes comparing the score with a best score and updating the best score based on the comparison. The method repeats the steps until each slot is bound, to produce a current schedule.

An example system includes logic configured to order a set of slots in the scheduling period. The system further includes logic configured to bind a selected portion of shifts to the slots to produce a current schedule having a score. The logic configured to bind includes logic configured to bind one shift in the selected portion of shifts to one slot. The logic configured to bind further includes logic configured to update a counters in accordance with the bound shift. Each counter has a corresponding work rule and each work rule has a target. The logic configured to bind further includes logic configured to compute the score of the current schedule. The score is based on a difference between each counter and the target for the corresponding work rule.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure.

FIG. 1 is a block diagram of a customer center environment.

FIG. 2 is a dataflow diagram showing one embodiment of a system for automatic scheduling of a workforce.

FIGs. 3A-3D illustrate an example scheduling scenario.

FIG. 4 is a flowchart of a scheduling process implemented by one embodiment of the scheduler of FIG. 2, which uses a "multi-week repair" technique to optimize locally across a worker's schedule.

FIG. 5 is a flowchart of one embodiment of the binding block from FIG. 4.

FIG. 6 is a flow chart of one embodiment of a multi-week class scheduling algorithm.

FIG. 7 is a hardware block diagram of a general-purpose computer that can be used to implement one or more of the components disclosed herein.

### DETAILED DESCRIPTION

When generating a schedule of shifts assigned to workers, the scheduling software searches the problem space of possible schedules for an optimal schedule, while using shift assignment rules as a constraint. The optimal schedule is determined by calculating a score for each schedule under consideration, and comparing that score to a target. Embodiments of scheduling software disclosed herein generate a schedule having a mullti-week scheduling period in combination with rules having a longer period (e.g., a scheduling period of 2 weeks in combination with a rule "Must work 1 weekend each 6 weeks"). Assignment rules which span a scheduling period are handled by adjusting the rule's target among divisions of the scheduling period.

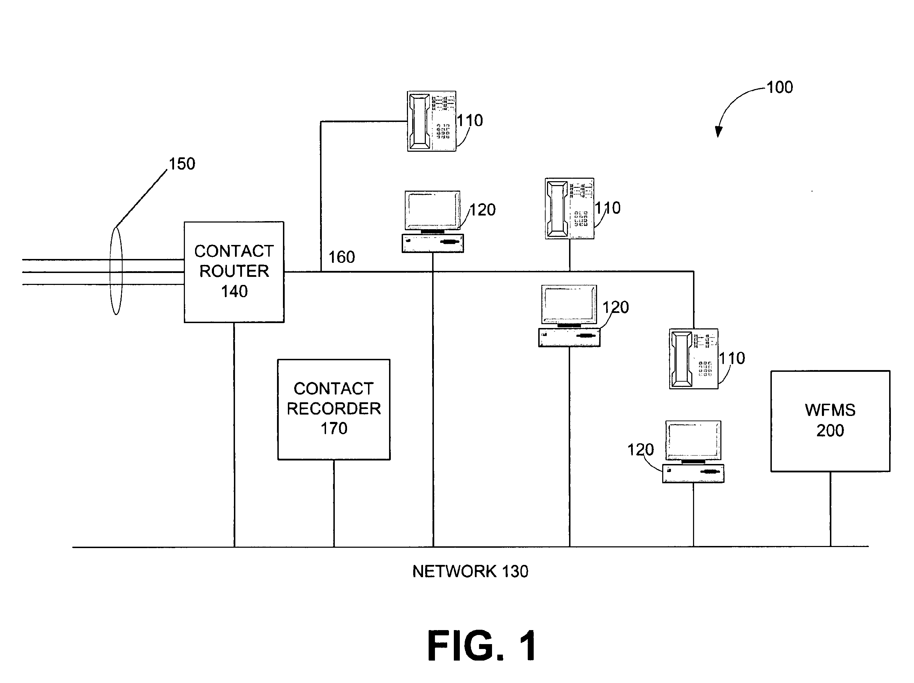

FIG. 1 is a block diagram of a customer center environment 100. The customer center 100 is staffed by agents who handle incoming and/or outgoing contacts. Although the traditional and most common form of contact is by phone, other types of contacts are becoming more common (e.g., text chat, web collaboration, email, and fax). An agent workspace includes an agent phone 110 and a workstation computer 120. A network 130 connects one or more of the workstations 120.

A contact router 140 distributes incoming contacts to available agents. When the contacts are made by traditional phone lines, the contact router 140 operates by connecting outside trunk lines 150 to agent trunk lines 160. In this environment, the contact router 140 may be implemented by an automatic call distributor (ACD), which queues calls until a suitable agent is available. Other types of contacts, such as Voice over Internet Protocol (VoIP) calls and computer-based contacts (e.g., chat, email) are routed over one or more data networks. These contacts are distributed over network 130 to one of the agent workstations 120.

During a customer contact, the agent interacts with one or more applications running on the workstation 120. Example workstation applications give the agent access to customer records, product information, ordering status, and transaction history, for example. The applications may access one or more business databases (not shown) via the network 130.

A contact recorder 170 provides the ability to capture or record contacts of many different types, including traditional and IP telephony environments, text chat, web collaboration, email, and fax. A recorded contact may consist of multiple streams of data. One stream may be considered a "content" stream: on a voice call, the content stream is a digitized voice stream; on a text chat contact, the content stream is text.

A customer center may include, but is not limited to, outsourced customer centers, outsourced customer relationship management, customer relationship management, voice of the customer, customer interaction, customer center, multi-media customer center, remote office, distributed enterprise, work-at-home agents, remote agents, branch office, back office, performance optimization, workforce optimization, hosted customer centers, and speech analytics, for example.

Customer center 100 also includes a workforce management system (WFMS) 200. WFMS 200 performs various functions. One such function is providing a customer center supervisor or manager with information about agents and contacts, both historical and real-time. Another function is supplying the supervisor with information on how well each agent complies with customer center policies. Yet another function is calculating staffing levels and creating agent schedules based on historical patterns of incoming contacts.

In the environment described above, the workers assigned to shifts are customer center agents. However, the scheduling methods and systems described herein are also applicable to scheduling other kinds of workers in other types of work environments. Therefore, the remaining embodiments will refer to workers rather than agents.

In one embodiment, WMFS 200 includes, is integrated with, or communicates with one or more of a performance manager, an evaluation manager, and a development manager. The evaluation manager allows various types of worker performance review processes to be managed (i.e., 360 degree reviews). The performance manager receives data from the evaluation manager and presents the performance data to the customer center manager through various scorecard views. The development manager tracks worker Learning/Development and detects a need for training.

It should be noted that customer center 100 herein can contain system which perform speech analytics (i.e., the analysis of recorded speech or real-time speech), and which can be used to perform a variety of functions, such as automated call evaluation, call scoring, quality monitoring, quality assessment and compliance/adherence. By way of example, speech analytics can be used to compare a recorded interaction to a script (e.g., a script that the agent was to use during the interaction). In other words, speech analytics can be used to measure how well agents adhere to scripts, identify which agents are "good" sales people and which ones need additional training. As such, speech analytics can be used to find agents who do not adhere to scripts. Yet in another example, speech analytics can measure script effectiveness, identify which scripts are effective and which are not, and find, for example, the section of a script that displeases or upsets customers (e.g., based on emotion detection). As another example, compliance with various policies can be determined. Such may be in the case of, for example, the collections industry where it is a highly regulated business and agents must abide by many rules. The speech analytics of the present disclosure may identify when agents are not adhering to their scripts and guidelines. This can potentially improve collection effectiveness and reduce corporate liability and risk.

In this regard, various types of recording components can be used to facilitate speech analytics. Specifically, such recording components can perform one or more of various functions such as receiving, capturing, intercepting, and tapping of data. This can involve the use of active and/or passive recording techniques, as well as the recording of voice and/or screen data.

It should be noted that speech analytics can be used in conjunction with such screen data (e.g., screen data captured from an agent's workstation/PC) for evaluation, scoring, analysis, adherence, and compliance purposes, for example. Such integrated functionality can improve the effectiveness and efficiency of, for example, quality assurance programs. For example, the integrated function can help companies to locate appropriate calls (and related screen interactions) for quality monitoring and evaluation. This type of "precision" monitoring improves the effectiveness and productivity of quality assurance programs.

Another aspect that can be accomplished involves fraud detection. In this regard, various manners can be used to determine the identity of a particular speaker. In some embodiments, speech analytics can be used (independently and/or in combination with other techniques) to perform fraud detection. Specifically, some embodiments can involve identification of a speaker (e.g., a customer) and correlating this identification with other information to determine whether a fraudulent claim for example is being made. If such potential fraud is identified, some embodiments can provide an alert. For example, the speech analytics of the present disclosure may identify the emotions of callers. The identified emotions can be used in conjunction with identifying specific concepts to help companies spot either agents or callers/customers who are involved in fraudulent activities.

Referring back to the collections example outlined above, by using emotion and concept detection, companies can identify which customers are attempting to mislead collectors into believing that they are going to pay. The earlier the company is aware of a problem account, the more recourse options they may have. Thus, the speech analytics of the present disclosure can function as an early warning system to reduce losses.

Also included in this disclosure are embodiments of integrated workforce optimization platforms, as discussed in U.S. Patent Application No. 11/359,356, filed on February 22, 2006, entitled "Systems and Methods for Workforce Optimization," and U.S. Patent Application No. 11/540,185, filed on September 29, 2006, entitled "Systems and Methods for facilitating Contact Center Coaching," both of which are hereby incorporated by reference in their entireties. At least one embodiment of an integrated workforce optimization platform integrates: (1) Quality Monitoring/Call Recording - voice of the customer; the complete customer experience across multimedia touch points; (2) Workforce Management - strategic forecasting and scheduling that drives efficiency and adherence, aids in planning, and helps facilitate optimum staffing and service levels; (3) Performance Management - key performance indicators (Kips) and scorecards that analyze and help identify synergies, opportunities and improvement areas; (4) e-Learning - training, new information and protocol disseminated to staff, leveraging best practice customer interactions and delivering learning to support development; (5) Analytics - deliver insights from customer interactions to drive business performance; and/or (6) Coaching - feedback to promote efficient performance. By way of example, the integrated workforce optimization process and system can include planning and establishing goals - from both an enterprise and center perspective - to ensure alignment and objectives that complement and support one another. Such planning may be complemented with forecasting and scheduling of the workforce to ensure optimum service levels. Recording and measuring performance may also be utilized, leveraging quality monitoring/call recording to assess service quality and the customer experience.

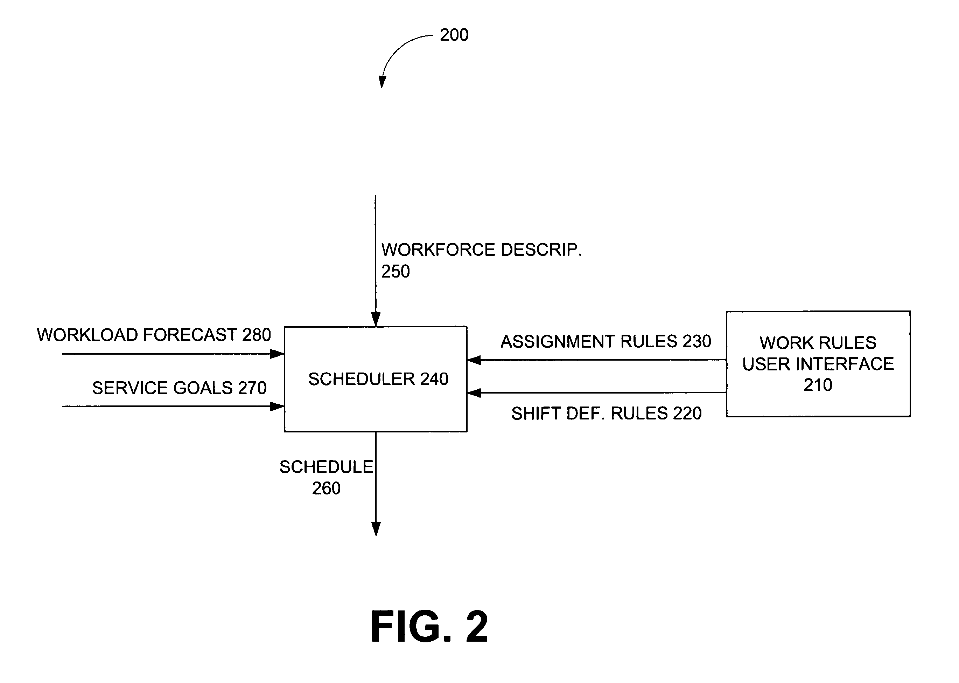

FIG. 2 is a dataflow diagram showing one embodiment of a system (200) for automatic scheduling of a workforce. A user interacts with a work rules user interface component 210 to create shift definition rules 220 and shift assignment rules 230. Shift definition rules 220 describe attributes of a shift, e.g., maximum shift length, allowable shift start times, and break requirements. Assignment rules 230 describe ways in which shifts can be assigned to workers. In some embodiments of system 200, assignment rules 230 take the form of:
Worker
   - <must work, must have off>
   - <at least X, no more than X, exactly X, a fair # of>
   - <hours, days, shift Z [AM,PM], [Mon,Tues...Sun.], weekends>
   - during each Y <weeks, months, years>
where X is the rule's "target" and Y is the rule's "period".

Shift definition rules 220 and assignment rules 230 are provided as input to a scheduler component 240. In some embodiment, rules 220 and 230 are associated with a particular set of shifts and/or scheduling periods. Scheduler 240 also receives a workforce description 250, identifying a set of workers. Scheduler 240 produces a schedule 260 for the workers that attempts to optimize a goals input 270, while also meeting demand for a forecasted workload 280, and constraints imposed by rules 220 and 230.

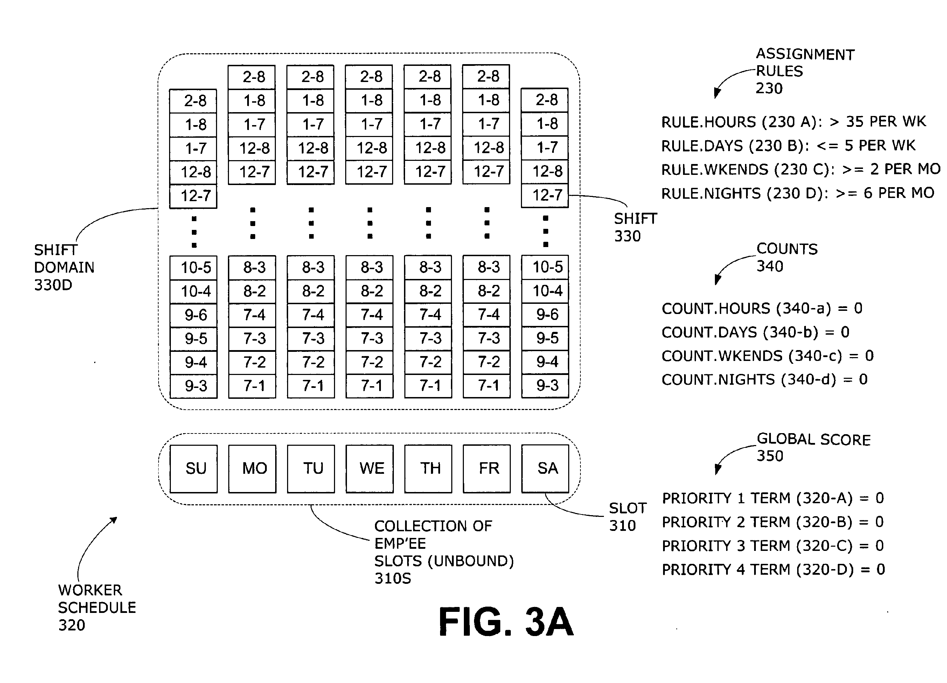

An overview of a scheduling process implemented by one embodiment of scheduler 240 will now be described. In the scheduling scenario illustrated in FIGs. 3A-3D, scheduler 240 produces a schedule which attempts to optimize shifts assigned to a worker for a scheduling period, while taking into account constraints imposed by shift definition rules 220 and assignment rules 230 that are applicable to the scheduling period. Each worker day within the scheduling period is referred to as a "slot" or a "variable" (310). The collection of days that are considered during the scheduling process is a "set of slots" or a "set of variables" (310S). In the example scenario of FIGs. 3A-3D, the set of slots 310S corresponds to a single week (Sunday through Saturday), but multi-week schedules are also handled. Scheduler 240 creates a worker schedule 320 by assigning shifts (330) to individual slots 310, where each shift 330 is chosen from a domain of possible shifts (330D). This process is also called "binding" a shift 330 to a slot 310.

As each shift 330 is bound, a set of counts (340) is updated, where each count 340 is associated with an assignment rule 230. Scheduler 240 then uses counts 340 to determine a global score 350 for the particular schedule 320 under consideration. The scheduling process can be viewed as a search for a schedule 320 with a good, or good enough, score 350. The schedule 320 with the best score 350 so far is saved, and the search continues by removing some shift assignments and adding others.

FIG. 3A shows the state at the start of the scheduling process. No shifts in domain 330D are yet bound, and the counts 340 are all zero. The shifts 330 associated with a particular slot 310 depend on shift definition rules 220, and may vary from day to day. For example, in FIG. 3A, weekend shifts start at 9 AM while weekday shifts start at 7 AM. Shift length or duration also depends on shift definition rules 220: in FIG. 3A, shift length is between 6 and 9 hours.

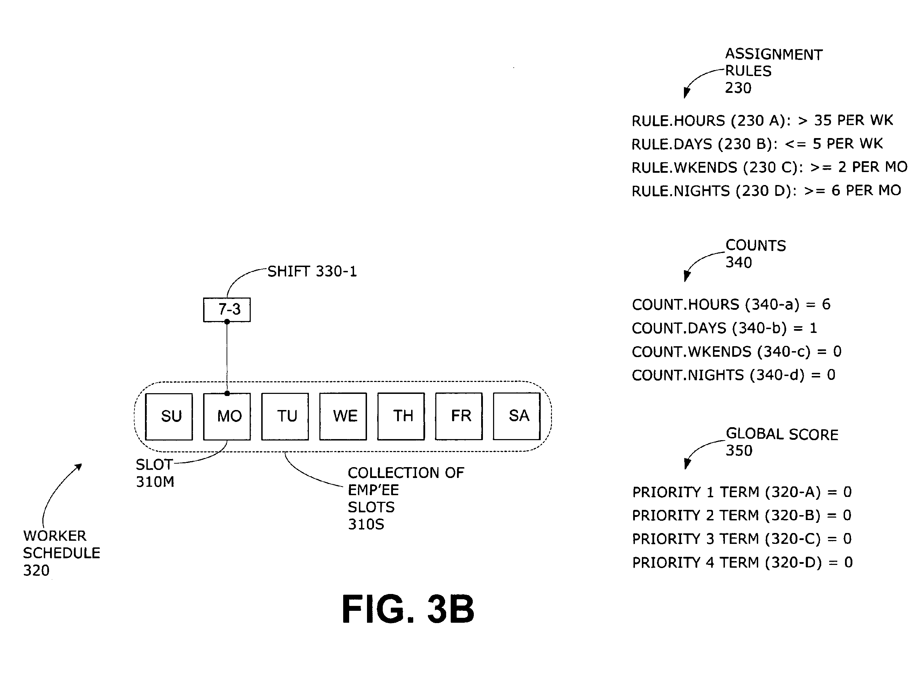

FIG. 3B shows the state after one shift 330 has been bound. (The shift domain 330D is not shown in FIGs. 3B-3D.) The Monday slot 310M has been bound to a 7-3 shift 330-1. Individual counts 340 have been updated appropriately: the Days count (340-b) has been updated to 1; since the shift duration is 6, the Hours count (340-a) has been updated to 6; and since the shift is neither a weekend nor a night, the Weekends (340-c) and Nights (340-d) counts are 0.

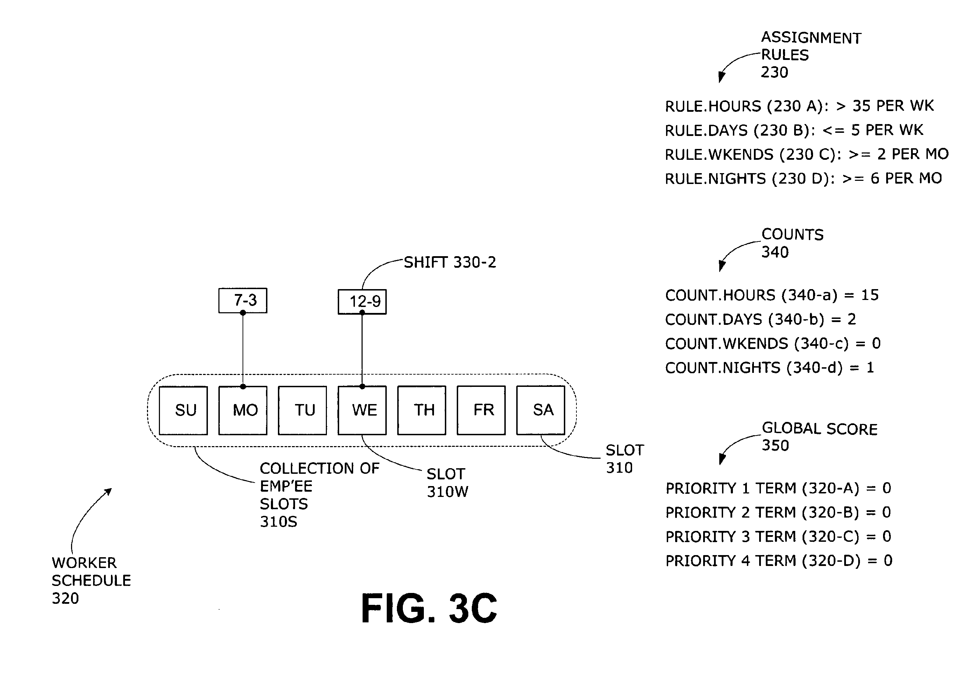

FIG. 3C shows the state after an additional shift 330 has been bound: the Wednesday slot 310W has been bound to a 12-9 shift 330-2. Individual counts 340 have been updated appropriately: the Days count (340-b) has been updated to 2; since the shift duration is 9, the Hours count (340-a) has been updated from 6 to 15; since the shift is a night, the Nights count (340-d) is updated to 1; since the shift is not a weekend, the Weekends count (340-c) is 0.

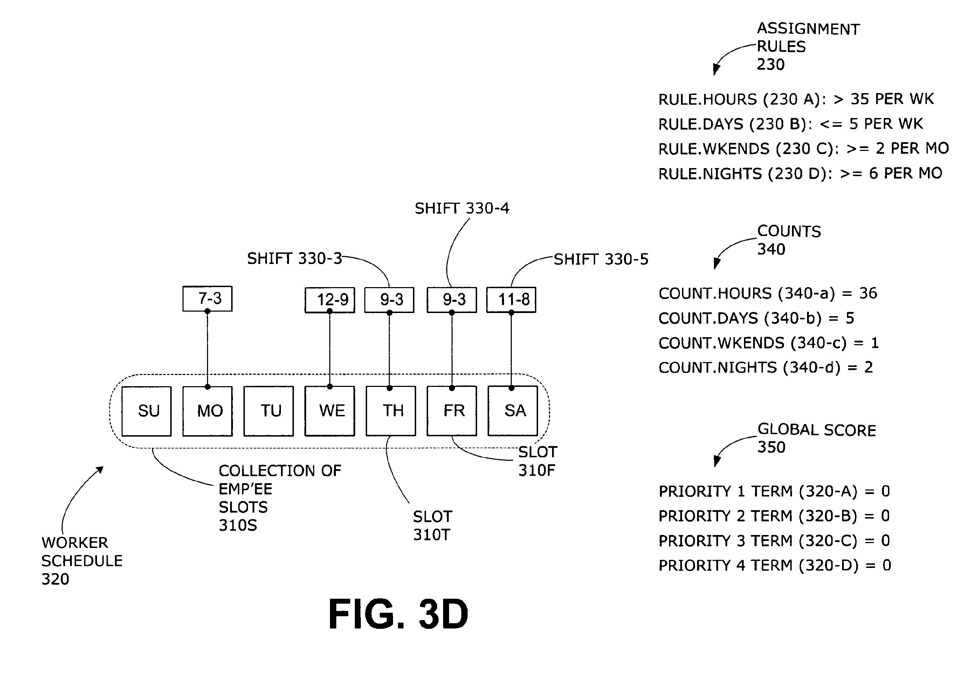

FIG. 3D shows the state after two more additional shifts 330 have been bound. The Thursday and Friday slots (310T, 310F) have each been bound to a 9-3 shift (330-3, 330-4). The Saturday 310S has been bound to an 11-8 slot 330-5. Individual counts 340 have been updated appropriately: the Days count (340-b) has been updated to 5; the Hours count (340-a) has been updated to 36; the Nights count (340-d) is updated to 2; the Weekends count (340-c) has been updated to 1.

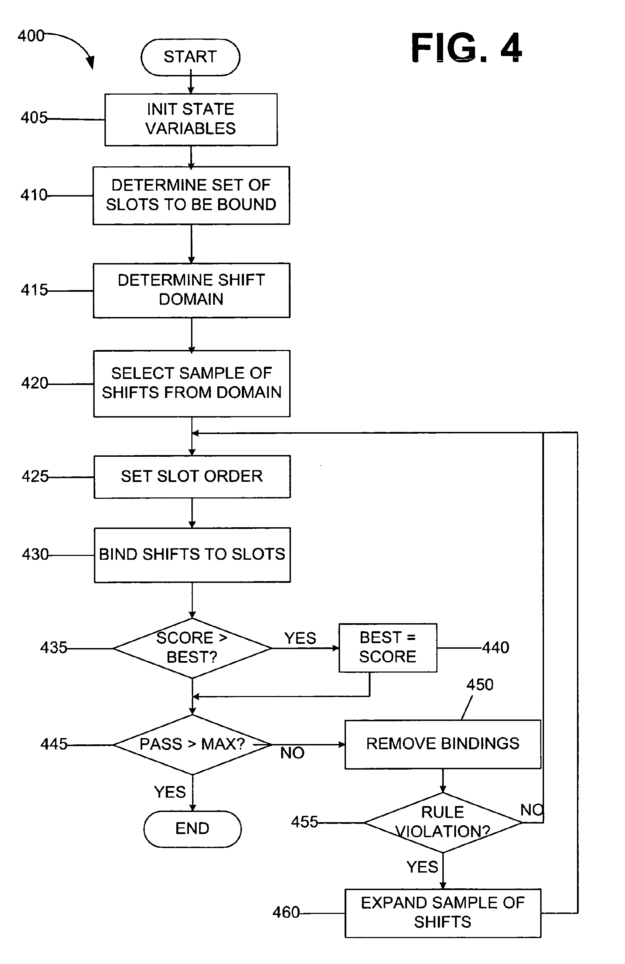

FIG. 4 is a flowchart of a scheduling process implemented by one embodiment of scheduler 240, which uses a multi-week repair algorithm to optimize locally across a worker's schedule. Before explaining the individual blocks in FIG. 4, a brief overview will be given. As explained earlier, a worker schedule is made up of a set of shift assignments for work days ("slots") in the scheduling period, where each slot is associated with a domain of possible shift assignments. An exhaustive search of this space is computationally infeasible, but the inventive repair algorithm described herein produces an acceptable solution within a computationally tractable amount of time. The search is conducted in a series of passes or iterations, where each pass increases the sample of shift assignments included in the slots' domains. Search time is reduced by ending the search when an acceptable solution is found, or when all shift assignments have been explored. (Note that this does not imply that all possible schedules were explored, only that full domains were used in the local search). An acceptable solution is one which violates no work rules. However, at least two passes are completed, whether work rules are violated or not, in order to insure a schedule with a reasonable service level.

Process 400 starts at block 405, where state variables used in the process are initialized. In this example embodiment, this initialization includes: Score = 0; Best = 0; Pass =1; and Schedule = None. Next, the set of slots to be bound (310S in FIG. 3) is determined at block 410. If any active rule extends past the scheduling period (e.g., a "3-week" rule extends past the 2-week scheduling period), then set 310S includes all slots in the scheduling period. If no active rule 230 extends past the scheduling period, some embodiments limit slot set 310S to those slots in a shorter period. In one such example embodiment, when the scheduling algorithm supports a two-week scheduling period, but no multi-week rules are active, block 405 simplifies the search by limiting slot set 310S to one week rather than two.

Processing continues at block 415, where the domain of shifts for binding (330D) is determined, based on shift definition rules 220. Next, a random sample of shifts from domain 220-A is selected at block 420. The binding order of slots 310 is then determined at block 425. Various orderings are possible, including greedy (i.e., shifts are scheduled according to how well each improves the global score), most-constrained-first (i.e. shifts are scheduled according to the number of allowable start times); and fill-outwards (start at some random day, and then schedule from before the starting point and then after of the starting point). Other variations allow each of the previous types of ordering, and also add the week that shift belongs to. In one embodiment, the first two passes use greedy and most-constrained-first slot orderings, and successive passes use a random one of the other orderings.

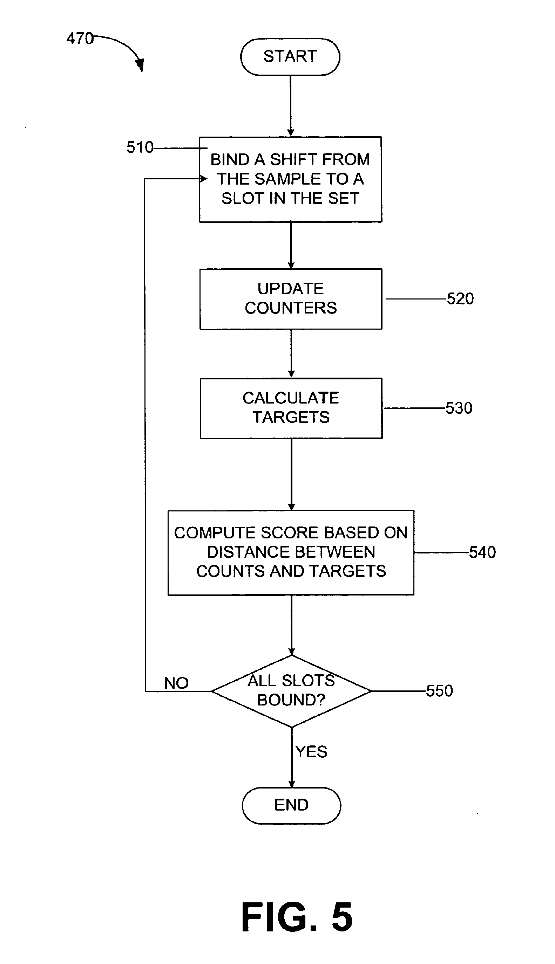

Next, at block 430, a set of shifts within the sample are selected and bound to slots in set 310S. This set of bindings represents a schedule 320, and the schedule 320 has a score that is computed as bindings are added to, and removed from, the schedule. This score can be viewed as an evaluation factor, against which a schedule is evaluated. The shifts are selected in a manner which results in the best score while not violating any hard constraints imposed by work rules. The binding and scoring process of block 430, which can also be viewed as a search, will be described in more detail in connection with the flowchart FIG. 5.

Processing continues at block 435, which determines if the score of the current schedule under consideration is higher than the best score so far. If the current schedule has a better score, then the Best variable is updated at block 440 to reflect the current score. Thus, the Best variable can be considered as a different evaluation factor, and is compared to the first evaluation factor (score).

After this block, or if the current schedule does not have a better score, the Pass variable is compared to a maximum, at block 445. If Pass has reached a maximum, then the schedule currently under consideration is considered to be good enough, and processing is complete. In another embodiment, processing completes when the schedule has a score or evaluation factor that exceeds a threshold.

If Pass has not reached the maximum, then processing continues at block 450, where the current schedule is adjusted by removing one more bound shifts. In one embodiment, shifts are removed randomly. In another embodiment, shifts that decrease the global score the least are removed. Removing shifts and rescheduling has the effect of starting the search from a different schedule, which allows the overall process to explore different schedules.

Next, block 455 determines whether any work rules are violated by the current schedule as modified by the unbinding. If Yes, then the sample of shifts is expanded at block 460 to include other shifts in domain 330D. After block 460, or if no rules are violated, then processing returns to block 425.

A slot ordering is selected at block 460, and the search continues with the current schedule under consideration. This next iteration of the search may use a different set of shift bindings (as adjusted by block 450), and/or the sample of shifts may have been expanded. The process continues for a maximum number of passes (iterations), at which point the schedule under consideration is considered to be good enough.

Binding order of slots is important because of its interaction with constraint propagation. Constraint propagation works as follows. Suppose that a shift definition rule defines a worker's shifts as starting at 8 AM, 9 AM, 10 AM, or 11 AM for weekdays (M-F), and that another rule says "Shifts must start at the same time throughout the week". On Monday, the best service level could be expected from an 8 AM start time, but on all the other days, the best service could be expected for an 11 AM start time. Consider the following slot orderings: (M,T,W, Th, F) and (W, M, T, Th, F). The first ordering (M,T,W, Th, F) schedules the Monday slot first, and Monday 8 AM shift is selected (best service level). Then, because of the "Shifts must start at same time" rule and constraint propagation, all other slot days (T,W,Th,F) is constrained to the 8 AM start time. The result in a less than optimal schedule in terms of service level, as four "best" 11 AM shifts beat one "best" 8 AM shift. However, the second ordering (W,M,T,Th,F) selects the 11 AM shift, and results in a better schedule.

Having discussed the importance of ordering, the benefits of particular orderings will now be discussed. Suppose that a shift definition rule defines a worker's shifts as starting at 8 AM Monday, or 8-11 AM for Tuesday-Friday, and that another rule says "Shifts must start at the same time throughout the week". The ordering (W, M, T, Th, F) results in the selection of 11 AM for Wednesday, which would then eliminate the Monday 8 AM shift (due to "Shifts must start at same time" rule and constraint propagation). Thus, when time to schedule the Monday slot, there would be no legal start times left. The scheduler would be unable to schedule the slot (a "conflict"). However, using 'Most constrained first' ordering instead selects the Monday slot first, since it had the smallest domain (i.e. was most constrained) and results in a schedule with no conflicts.

To understand the "greedy" ordering, consider the previous examples, but replacing the "Shifts must start at the same time" rule with "Must work exactly 1 day each week" and "Must work exactly 1 Friday each week" rules. Now consider the ordering (M,T,W,Th,F). To satisfy the "exactly 1 day''' rule, a shift would be assigned to the Monday slot, and on Friday the scheduler would have a conflict - scheduling another shift on Friday violates the "exactly 1 day" rule. However, a "greedy" ordering would yield (F, M, ...), as binding the Friday slot to a shift satisfies two rules (giving the best possible score). Therefore, the "greedy" ordering leads to a good solution.

FIG. 5 is a flowchart of one embodiment of the binding or scheduling block 430 from FIG. 4. The process starts at block 510, where one of the shifts in the sample (where sample was determined in block 420 or 450) is bound to one of the slots in the set of slots. Next, at block 520, counts 340 associated with assignment rules 230 are updated. (Count updates were described earlier in connection with FIGs. 3A-3D.) Processing continues at block 530, where targets associated with assignment rules 230 are calculated. (Targets were described earlier in connection with FIG. 2.) Next, at block 540, the current schedule's score is computed, based on the distance between counts 340 and targets. Processing continues at block 550, which determines whether all slots have been bound. If Yes, then the current schedule is complete, and the process returns to FIG. 4. Otherwise, the process repeats starting with block 510. Multi-Week Assignment Rules

As described earlier, a particular assignment rule 230 could be confined to a single scheduling period, or could span across more than one scheduling period (e.g., an "every 2 weeks" rule with a single-week scheduling period). In the first case, the assignment rule 230 can be viewed as having a single target. In the second case, the assignment rule 230 can be viewed as having multiple targets, one for each schedule division in the rule period. Consider a hypothetical scenario in which the scheduling period is 2 weeks, and the assignment rule 230 is "Must work 1 weekend each 6 weeks". This assignment rule 230 can then be considered to have one target for the first division (weeks 1-2), another target for the middle division (weeks 3-4), and yet another target for the last division (weeks 5-6). Scheduler 240 adjusts these multiple targets for rules that span scheduling periods by prorating, as follows.

For any such rule period that starts before/at, and ends during, the period, the target specified in the rule is used (i.e., the target is not adjusted). For any rule period that ends after the scheduling period, scheduler 240 determines how much of the rule period intersects with the scheduling period. Scheduler 240 then prorates the target by applying the percent of intersection to the rule target. That is, the target is divided among each division within the rule period. For example, if a rule having a target of 9 intersects the schedule by 33 percent, then the adjusted target for each of the schedule periods is an integer value of 3 days (0.33 * 9). However, if the prorated target is fractional, scheduler 240 rounds from a fraction to a whole unit, and the whole unit becomes the target of one of the multiple divisions, picked at random.

One embodiment of this fractional prorating works as follows. Scheduler 240 calculates how much time is left to satisfy the rule, expressed a fraction. For example, when the current scheduling period is division 1 (weeks 1 &2) of a 6-week rule, the time left is (6-2)/6=0.66, if the current period is division 2 (weeks 3&4), the time left is (6-4)/6=0.33, and if the current period is division 3 (weeks 5&6), then the time left is (6-6)/6=0. Scheduler 240 determines which division gets the rounded whole unit by comparing the prorated fractional target to a random fractional number between 0 and 1 (e.g., seeded on worker and week). When the random fractional number is greater than the time left to satisfy, then scheduler 240 rounds up and assigns the whole unit to the target for the following scheduling period. When the random fractional number is greater than the time left to satisfy, then scheduler 240 rounds down and assigns the whole unit to the target for the current scheduling period. This has the affect of distributing the target evenly across scheduling periods. For example, each scheduling period gets the same number of weekends, but a particular worker may or may not be scheduled on a weekend during a given scheduling period.

Consider an example scenario, with a rule "Must work 1 full weekend each 6 weeks" and a scheduling period of 2 weeks. The prorating calculation results in (2/6) = .33 * 1 full weekend = .33 full weekends each scheduling period. Suppose the random number is 0.42. When the first scheduling period in the 6-week rule is under consideration, the percent time left to satisfy the rule is 4/6 = 0.6666. Since 0.6666 > 0.42, scheduler 240 rounds down and assigns 0 to the target for the first 2-week period within the rule period. When the second scheduling period in the 6-week rule is under consideration, the percent time left is 2/6 = 1/3 = .3333. Since 0.3333 < 0.42, scheduler 240 rounds up, and assigns 1 to the target for the second 2-week period within the rule period. Note that comparing a fractional random number against percent time left leads to a round up at some point. In addition, seeding the pseudo-random number on worker and week guarantees that on average, the rounding will be distributed evenly across workers and weeks. An additional benefit of the seeded pseudo random number is that is maintains consistency when rescheduling the same week.

### Multi-Week Fairness Rules

Some embodiments of scheduler 240 support a type of work rule designed to insure that shift assignments are fair ("fairness rules"). Because fairness rules do not have fixed targets, some of these embodiments compute targets as follows. Scheduler 240 initially ignores fairness rules and schedules for demand, a technique known as "relaxation". Scheduler 240 next computes an average value for the worker group in the rule for the unit being counted. Then scheduler 240 does another pass and targets the computed average value, within some predetermined tolerance. In some embodiments, the tolerance is 1.

Consider an example scenario, where the rule period is 2 weeks, the tolerance is 1, and the schedule produced by the relaxation pass is such that 10 workers in the group have 10 weekends between them. Note that at this stage scheduler 240 may have assigned some workers 2 weekends, and some 0 (due to randomness or perhaps some other rule), but the average is 1 weekend for each worker. In this example, the tolerance of ±1 allows some workers to get 0 weekends and some to get 2, for the first scheduling period. At first glance, this would seem undesirable. However, if the rule period was defined over a year, the maximum unfairness over the whole year would still be 2 weekends, which is acceptable. On the other hand, reducing the tolerance to zero can result in fractional targets, which are undesirable. For example, 5 weekends between 10 workers is 0.5 weekends per worker, which gives a target of 0 weekends (resulting in under-staffing) or 1 weekend (resulting in overstaffing). Using a minimum tolerance of 1 reduces problems with fractional targets.

### Class Assignment Rules

A "class" rule takes the form "workers A, B, C, and D must attend between X and Y sessions of class X in this time period". With multi-week scheduling, classes can be assigned to any time period which falls within the scheduling period. The general problem is to schedule the least number of class sessions for given attendee availability. This involves determining the required number of sessions (a specific class at a specific time), and finding clusters of workers that are all available for a given class session. Each class session is subject to its own start time constraints, minimum and maximum attendee constraints, and simultaneous-start-time constraints.

The search space for this problem is large, and the solution is computationally infeasible using an unconstrained local search. This can be understood by examining an example scenario. Suppose a class rule states "Workers A, B, C, D must each attend 1 session of class Z during some shift". Furthermore, class Z must have exactly 2 sessions, each with between 2 and 4 attendees, and the class sessions may be placed on any M,W,F (between the hours of 4 PM and 7 PM) within the 3 week period. Note that the rule states "during some shift": the attendee must attend the class session during some scheduled shift. This creates a dependence on slot shift assignments.

Now consider a multi-week repair technique which only searches locally across a single worker's schedule, and add the assignment rule "Must work exactly 1 day each 3 weeks" to each worker. The work rule "work exactly 1 day" limits each worker to only 1 shift during the 3 week period, while the class rule specifies that each shift must coincide for the duration of the class. Therefore, the scheduler cannot schedule each worker independently. Instead, for each class rule, the scheduler loads all attendee slots, combined with the class sessions, into a single local search space. Consider the size of this search space: each worker has 21 slots; each slot has 10 possible start times; each class session may have 50 or so possible start times; leading to (10^(21^4)) (for 4 workers) possible schedules. This search space is computationally infeasible.

The class scheduling algorithm described herein addresses this problem. When binding an event to an attendee, the class scheduling algorithm insures that this event will eventually be bound to a start time when an attendee is available, greatly reducing the number of wrong paths. Furthermore, the algorithm eliminates even more wrong paths by binding the variable which is most constrained first.

The class scheduler operates as follows. A worker is bound to a session when the scheduler makes a decision to place the worker in a class session. A session is bound to a start time. Sessions may have workers bound to it before the session is bound to some particular start time. A session's start times are always consistent with respect to all workers that are currently bound to the session. This means that for each worker bound to that session, that worker must have slot start times that allow worker's shift assignment to fully intersect the class session. A worker's slot shift assignment start times are always consistent with sessions to which the worker is bound. To understand this, consider what gets bound first: the slot shift assignment; the worker to a session (which may be itself bound or unbound); or the session to a start time.

Ordering of slot variables was discussed above in connection with FIG. 4, in the context of binding slots to shifts. The class scheduling context involves the additional variables of attendees and session, so the ordering of those variables is also relevant. As each binding propagates the constraints to all other unbound variables (unbind slots, attendees, and sessions), the search order for each variable affects which schedules are explored. The class scheduling algorithm decides when to schedule attendees (i.e. binding the attendee to some session(s)) and when to schedule sessions (i.e., bind the session to some start time).

The class scheduling algorithm typically binds attendees to sessions first, and then slots or sessions are bound first, accordingly to the current pass. The implications of binding the attendee are as follows. Initially, sessions are not bound to any start time, so they are essentially identical. Thus, binding the attendee implies merely that all attendees bound to some session must form an availability group (i.e. attendees must all be available during some intersecting time of duration that is at least as great as the duration of the session). As we the class scheduler binds attendees to sessions, any session start times that would not be consistent with that worker are constrained. Furthermore, a worker is not bound to a session if such a binding results in all start times being constrained (i.e. an empty domain). In this way, binding the attendees essentially forms the availability groups. However, during the search a certain amount of randomness exists in group selection. Thus, if more than one availability group exists during different passes, then different random groups are formed during each pass. The ordering of slots then determines which group is in fact better, in terms of service level and other work rules.

The example scenario described above produced (10^(21^4)) possible schedules initially. However, once binding of slots to shift assignments (i.e. start times) is commenced, the class scheduling algorithm described herein rapidly shrinks the search space. Here is a sample search path for that same example scenario, assuming that Workers A & B are available first week and Workers C & D are available second week. Further suppose that initial conditions are unbound sessions X & Y.
a. The domain of attendee A is initially sessions X & Y.
b. Worker A is bound to session X. This causes the domain of session X to be constrained to first week.
c. Now attendees C & D have domains of only session Y (as session X has already been constrained to first week.
d. Since C & D have now smaller domains than B (as session Y is still empty B can still attend both sessions X & Y) ordering by "most-constrained-first" results in attendees C & D to be bound next.
e. Bind attendees C & D to session Y.
f. Bind slots for worker A. This constrains the start times of session X. Note, since workers have rule "exactly 1 day each 3 week" causing only one slot day to be bound to a shift, this essentially constrains the sessions to a single day.
g. Now bind slots for worker B. The domains of each slot are already constrained by the worker A's slot bindings through their shared session X.
h. Then bind slots C & D in a like manner.
i. Finally bind the sessions X & Y to the start times that would hurt service level the least.

Although this illustrates only one pass through the algorithm, and there may be hundreds of passes, the algorithm has nonetheless reduced the search space to a fraction of its original size. Note that this example uses one possible ordering, but there are many orderings that may target specific problems.

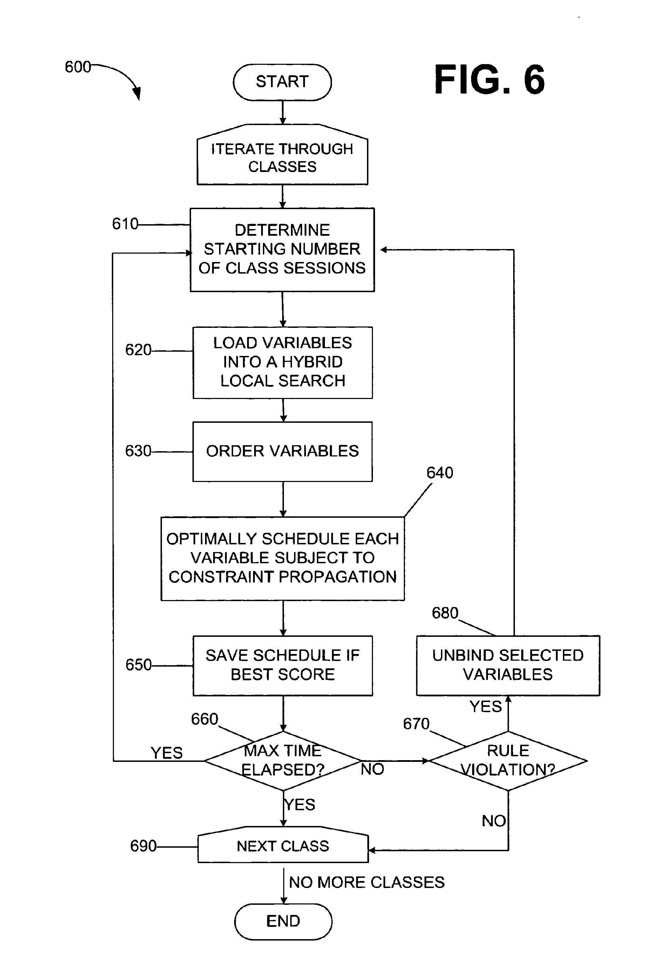

FIG. 6 is a flow chart of one embodiment of a multi-week class scheduling algorithm. The process 600 iterates through each class (605). The iteration begins at block 610, where a number of starting class sessions is determined. This number is loose, and is based on minimum/maximum attendees constraints. Next, at block 620, slots, attendees, and sessions are loaded into a hybrid local search, which is specific for class scheduling. Processing continues at block 630, where variables (slots, attendees, and sessions) are ordered based on some criteria described (examples of which were described above). Next, block 640 optimally schedules each variable subject to constraint propagation, as described previously. Processing continues at block 650, where the schedule is saved if its score is better than the best so far. Block 660 determines if the elapsed time is greater than a maximum allowed time. If Yes, then this class schedule is complete, and the process 600 iterates to the next class (690). If maximum time has not yet elapsed, then block 670 checks for work rule violations. If none, this class schedule is complete, and the process 600 iterates to the next class (690). If work rule violations are detected, block 680 selects variables to unbind and the process iterates to the next class (690), and the next class is processed starting at block 610. When all classes have been iterated, the process 600 is complete.

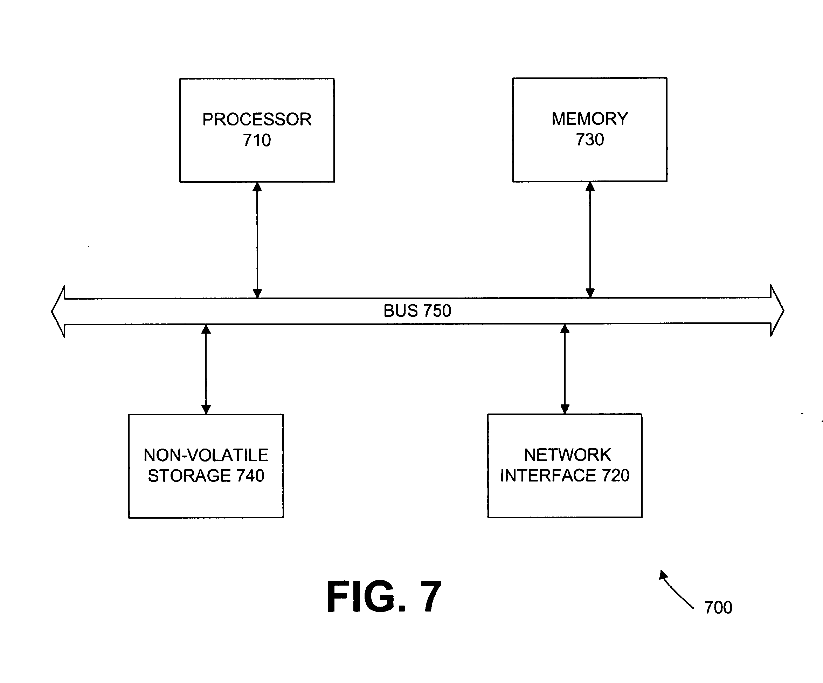

FIG. 7 is a hardware block diagram of a general-purpose computer 700 that can be used to implement one or more of the components disclosed herein. Computer 700 contains a number of components that are known in the art, including a processor 710, a network interface 720, memory 730, and non-volatile storage 740. Examples of non-volatile storage include, for example, a hard disk, flash RAM, flash ROM, EEPROM, etc. These components are coupled via a bus 750. Memory 730 contains instructions which, when executed by processor 710, implement the methods and systems disclosed herein. Omitted from FIG. 7 are a number of conventional components, known to those of ordinary skill in the art, that are unnecessary to explain the operation of the computer 700.

The systems and methods disclosed herein can be implemented in software, hardware, or a combination thereof. In some embodiments, the system and/or method is implemented in software that is stored in a memory and that is executed by a suitable microprocessor (µP) situated in a computing device. However, the systems and methods can be embodied in any computer-readable medium for use by or in connection with an instruction execution system, apparatus, or device. Such instruction execution systems include any computer-based system, processor-containing system, or other system that can fetch and execute the instructions from the instruction execution system. In other embodiments, the system and/or method is implemented in hardware, including, but not limited to, a programmable logic device (PLD), programmable gate array (PGA), field programmable gate array (FPGA) or an application-specific integrated circuit (ASIC).

In the context of this disclosure, a "computer-readable medium" can be any means that can contain, store, communicate, propagate, or transport the program for use by, or in connection with, the instruction execution system. The computer readable medium can be, for example but not limited to, a system or propagation medium that is based on electronic, magnetic, optical, electromagnetic, infrared, or semiconductor technology.

Specific examples of a computer-readable medium using electronic technology would include (but are not limited to) the following: an electrical connection (electronic) having one or more wires; a random access memory (RAM); a read-only memory (ROM); an erasable programmable read-only memory (EPROM or Flash memory). A specific example using magnetic technology includes (but is not limited to) a portable computer diskette. Specific examples using optical technology include (but are not limited to) optical fiber and compact disc read-only memory (CD-ROM).

It should be noted that any process descriptions or blocks in flowcharts should be understood as representing modules, segments, or portions of code which include one or more executable instructions for implementing specific logical functions or steps in the process. As would be understood by those of ordinary skill in the art of the software development, alternate embodiments are also included within the scope of the disclosure. In these alternate embodiments, functions may be executed out of order from that shown or discussed, including substantially concurrently or in reverse order, depending on the functionality involved.

This description has been presented for purposes of illustration and description. It is not intended to be exhaustive or to limit the disclosure to the precise forms disclosed. Obvious modifications or variations are possible in light of the above teachings. The embodiments discussed, however, were chosen to illustrate the principles of the disclosure, and its practical application. The disclosure is thus intended to enable one of ordinary skill in the art to use the disclosure, in various embodiments and with various modifications, as are suited to the particular use contemplated. All such modifications and variation are within the scope of this disclosure, as determined by the appended claims when interpreted in accordance with the breadth to which they are fairly and legally entitled.

## Claims

1. A computer-implemented method of scheduling a worker in a customer center for a scheduling period, the method comprising:
binding one worker shift within a portion of worker shifts to one of a set of slots;
updating a plurality of counters in accordance with the binding, each counter having a corresponding work rule, each work rule having a target;
the method **characterized by**:
computing a score for the current schedule based on a difference between each counter and the target for the corresponding work rule;
comparing the score with a best score;
updating the best score based on the comparison; and
repeating the steps for a number of iterations until each of the set of slots is bound, to produce a current schedule.

2. The method of claim 1, wherein each work rule specifies a target and a rule period, the method further comprising:
determining an amount of intersection between the scheduling period and the rule period of a work rule applicable to the scheduling period; and
adjusting the target of the applicable work rule by prorating the specified target in accordance with the amount of intersection.

3. The method of claim 2, wherein the determining is performed if the applicable work rule period ends after the scheduling period.

4. The method of claim 1, further comprising:
adding another one of the worker shifts to the portion of the worker shifts, after producing the score of the current schedule.

5. The method of claim 1, further comprising:
randomly selecting one of the work shifts; and
adding the randomly selected one of the worker shifts to the portion of the worker shifts, after producing the score of the current schedule.

6. A computer readable medium having instructions stored thereon for scheduling a worker in a customer center (100) for a scheduling period, wherein the instructions, when executed by a processing system, direct the processing system to:
order a set of slots (310S) in the scheduling period to be bound to worker shifts (330);
bind a selected portion of worker shifts within a domain (330D) to the ordered set of slots to produce a current schedule (260) having a score (350);
bind one worker shift in the selected portion of worker shifts to one slot (310) in the ordered set of slots;
update a plurality of counters (340) in accordance with the bound worker shift, each counter having a corresponding work rule (220 and 230), each work rule having a target; and
compute the score of the current schedule based on a difference between each counter and the target for the corresponding work rule.

7. The computer readable medium of claim 6, wherein the instructions when further executed by the processing system, further direct the processing system to, wherein each work rule specifies a target and a rule period:
determine an amount of intersection between the scheduling period and the rule period of a work rule applicable to the scheduling period;
prorate the specified target in accordance with the amount of intersection;
determine a time left to satisfy the applicable work rule;
compare the prorated target to a random fractional number if the prorated target is fractional;
round the prorated target to a whole number based on a comparison of the random fractional number and the time left to satisfy; and
assign the whole number to the target associated with the current or the following scheduling period, respectively, based on the comparison.

8. The computer readable medium of claim 7, wherein the instructions when further executed by the processing system, further direct the processing system to:
assign the whole number to the target associated with the current scheduling period, if the random fractional number is less than or equal to the time left to satisfy; and
assign the whole number to the target associated with the following scheduling period, if the random fractional number is less than or equal to the time left to satisfy.

9. The computer readable medium of claim 6, wherein the instructions when further executed by the processing system, further direct the processing system to:
select the portion of the worker shifts at random from a domain of worker shifts.

10. The computer readable medium of claim 6, wherein the instructions when further executed by the processing system, further direct the processing system to:
select all slots in the scheduling period to be the portion of the worker shifts when at least one work rule associated with the worker extends past the scheduling period.

11. The computer readable medium of claim 6, wherein the instructions when further executed by the processing system, further direct the processing system to:
select slots in a period shorter than the scheduling period to be the portion of the worker shifts when no work rule associated with the worker extends past the scheduling period.

12. A system (200) of scheduling a worker in a customer center (100) for a scheduling period, the system comprising:
logic (240) configured to order a set of slots (310S) in the scheduling period to be bound to worker shifts (330); and
logic configured to bind a selected portion of worker shifts within a domain (330D) to the ordered set of slots to produce a current schedule (260) having a score (350), wherein the logic configured to bind comprises, and the system **characterized by**:
logic configured to bind one worker shift in the selected portion of worker shifts to one slot (310) in the ordered set of slots;
logic configured to update a plurality of counters (340) in accordance with the bound worker shift, each counter having a corresponding work rule (220 and 230), each work rule having a target; and
logic configured to compute the score of the current schedule based on a difference between each counter and the target for the corresponding work rule.

13. The system of claim 12, wherein each work rule specifies a target and a rule period, the system further comprising:
logic configured to determine an amount of intersection between the scheduling period and the rule period of a work rule applicable to the scheduling period;
logic configured to prorate the specified target in accordance with the amount of intersection;
logic configured to determine a time left to satisfy the applicable work rule;
logic configured to compare the prorated target to a random fractional number if the prorated target is fractional;
logic configured to round the prorated target to a whole number based on a comparison of the random fractional number and the time left to satisfy; and
logic configured to assign the whole number to the target associated with the current or the following scheduling period, respectively, based on the comparison.

14. The system of claim 13, the system further comprising:
logic configured to assign the whole number to the target associated with the current scheduling period, if the random fractional number is less than or equal to the time left to satisfy; and
logic configured to assign the whole number to the target associated with the following scheduling period, if the random fractional number is less than or equal to the time left to satisfy.

15. A computer-implemented method of generating a schedule for a worker in a customer center for a scheduling period, the method comprising:
ordering a set of slots in the scheduling period to be bound to worker shifts;
the method **characterized by**:
binding a first portion of the worker shifts within a domain to the ordered set of slots to produce a first schedule having a first evaluation factor; and
comparing the first evaluation factor to a second evaluation factor; and
outputting a selected schedule based on the comparison.
